Europäisches Patentamt

European Patent Office

Office européen des brevets

(19)

(11) Veröffentlichungsnummer: **0 097 947**
**B1**

(12) **EUROPÄISCHE PATENTSCHRIFT**

(45) Veröffentlichungstag der Patentschrift: 28.09.88

(51) Int. Cl.⁴: **H 04 L 1/24**

(21) Anmeldenummer: 83106254.2

(22) Anmeldetag: 27.06.83

(54) **Anordnung zur Erzeugung von Quasizufallsfolgen im AMI-Code.**

(30) Priorität: 30.06.82 DE 3224442

(43) Veröffentlichungstag der Anmeldung:
11.01.84 Patentblatt 84/02

(45) Bekanntmachung des Hinweises auf die
Patenterteilung:
28.09.88 Patentblatt 88/39

(84) Benannte Vertragsstaaten:
AT BE CH DE FR GB IT LI LU NL SE

(56) Entgegenhaltungen:
FR-A-2 350 005
US-A-3 787 613
US-A-3 906 174

TELCOM REPORT, Band 3, Nr. 5, Oktober 1980,
Seiten 387-389, Passau, DE; J. DÖMER et al.:
"FM-Richtfunksysteme übertragen
Digitalsignale mit 8448 kbit/s"

(73) Patentinhaber: Siemens Aktiengesellschaft
Berlin und München
Wittelsbacherplatz 2
D-8000 München 2 (DE)

(72) Erfinder: Meyer, Fritz, Dr.-Ing.
Wifostrasse 5
D-8034 Germering (DE)

EP 0 097 947 B1

## Beschreibung

Die Erfindung betrifft eine Anordnung zur Erzeugung von Quasi-Zufallsfolgen in AMI-Code mit einem Generator für binäre Quasi-Zufallsfolgen.

Die Überwachung von Übertragungsstrecken für digitale Signale erfolgt häufig dadurch, daß an einzelnen Stellen dieser Übertragungsstrecken die übertragenen digitalen Signale auf Verletzungen der bei der Bildung der digitalen Signale verwendeten Coderegel überwacht werden. Diese Coderegelverletzungen müssen durch Übertragungsfehler entstanden sein. Voraussetzung für eine Ermittlung von Coderegelverletzungen ist dabei, daß ein redundanter Code vorliegt, der Verletzungen der Coderegel erkennen läßt. Ein häufig verwendeter Code bei der Übertragung digitaler Signale ist der sogenannte AMI-Code, bei dem es sich um einen pseudoternären Code handelt, in dem aufeinanderfolgende Eins-Zeichen durch Impulse mit abwechselnder Polarität übertragen werden, während Null-Zeichen dem Nullpegel zugeordnet sind.

Aus der Druckschrift "TELCOM REPORT", Band 3, Nr. 5 vom Oktober 1980, Seiten 387 bis 389, ist die Übertragung digitaler Signale mittels FM-Richtfunksystemen beschrieben. Dazu werden die digitalen Signale mittels eines selbstsynchronisierenden Scramblers verwürfelt und anschließend mittels eines JK-Flip-Flops und zweier über NAND-Gatter nachgeschalteter D-Flip-Flops in zwei binäre AMI-Signalströme umgeformt, die in einem einstellbaren Verstärker zu einem einzigen unipolaren AMI-Signal zusammengefaßt werden. Der einstellbare Verstärker besteht dabei aus zwei, von den Ausgängen der D-Flip-Flops angesteuerten emittergekoppelten Differenzverstärkern, die zueinander wiederum in Differenz geschaltet sind. Der Emitterstrom für die Differenzverstärker wird von einer einstellbaren Stromquellenschaltung erzeugt.

Ein Problem bei der Überwachung von Übertragungsstrecken für digitale Signale durch Untersuchung dieser Signale auf Coderegelverletzungen ist die gelegentliche Überprüfung der an bestimmten Stellen in der Übertragungsstrecke enthaltenen Coderegelverletzungsprüfer. Für diese Überprüfung werden beispielsweise AMI-codierte Testsignale benötigt, die auf ein zusätzlich übertragenes Signal hin örtlich erzeugt werden, die AMI-codierten Testsignale werden auch bei der Endprüfung nach Fertigstellung der Regeneratoren mit den Codeverletzungsprüfern benötigt.

Die Erzeugung von AMI-codierten Signalen erfolgt üblicherweise dadurch, daß dem Ausgang eines Generators für im Differenzbinärcode vorliegende Testsignale eine Stichleitung parallelgeschaltet ist, die am Ende kurzgeschlossen ist und deren einfache Signallaufzeit der halben Bitdauer der umzuformenden Signale entspricht. Durch Reflektion eines beispielsweise positiven Impulses am kurzgeschlossenen Ende der Stichleitung wird ein negativer Impuls erzeugt, der eine Bitdauer nach dem positiven Impuls am Eingang der Stichleitung erscheint. Eine derartige Art der Erzeugung von AMI-codierten Signalen ist aber für die Erzeugung von Testsignalen nicht geeignet, dadurch die Verwendung einer Stichleitung die Einhaltung der AMI-Coderegel erzwungen wird, während die Testsignale eine bestimmte Anzahl an Coderegelverletzungen enthalten müssen.

Die Aufgabe bei der vorliegenden Erfindung besteht also darin, eine Möglichkeit zur Erzeugung von AMI-codierten Testsignalen mit einer bestimmten Anzahl an Coderegelverletzungen zu finden, wobei zur Durchführung einer optimalen Prüfung die Testsignale in Form von Quasizufallsfolgen vorliegen sollen.

Erfindungsgemäß wird die Aufgabe dadurch gelöst, daß mit einem Ausgang des getakteten Generators für binäre Quasi-Zufallsfolgen der erste Eingang einer Differenzverstärkeranordnung und der eine Eingang eines Exklusiv-ODER-Gatters verbunden ist, daß der andere Eingang des Exklusiv-ODER-Gatters mit einem Steueranschluß verbunden ist, daß der Ausgang des Exklusiv-ODER-Gatters über ein Verzögerungsglied mit dem zweiten Eingang der Differenzverstärkeranordnung verbunden ist, daß die Differenzverstärkeranordnung zwei emittergekoppelte Differenzverstärker enthält, daß der erste dieser Differenzverstärker zwei npn-Transistoren enthält, deren Emitter miteinander und über eine erste Stromquelle mit einem Anschluß für die negative Betriebsspannung verbunden ist, daß der Basisanschluß des ersten Transistors mit dem ersten Eingang der Differenzverstärkeranordnung und der Basisanschluß des zweiten Transistors mit einer Referenzspannungsquelle verbunden ist, daß der Kollektoranschluß des ersten Transistors mit einem Ausgang für das inverse Ausgangssignal und über einen ersten Widerstand mit Bezugspotential verbunden ist, daß der Kollektoranschluß des zweiten Transistors mit einem Signalausgang und über einen zweiten Widerstand mit Bezugspotential verbunden ist, daß der zweite Differenzverstärker einen dritten und einen vierten npn-Transistor enthält, deren Emitteranschlüsse miteinander und über eine zweite Stromquelle mit der negativen Betriebsspannung verbunden sind, daß der Kollektoranschluß des dritten Transistors mit dem Kollektoranschluß des dritten Transistors und der Kollektoranschluß des vierten Transistors mit dem Kollektoranschluß des ersten Transistors verbunden ist, daß der Basisanschluß des vierten Transistors mit dem Basisanschluß des zweiten Transistors und der Basisanschluß des dritten Transistors mit dem zweiten Eingang der Differenzverstärkeranordnung verbunden ist.

Die erfindungsgemäße Lösung bietet eine Reihe von Vorteilen, die insbesondere darin liegen, daß die Anordnung insgesamt leicht integrierbar ist und bei einfachem Aufbau einen geringen Strombedarf aufweist.

Zur Erzeugung von Testsignalen, die vor der Zuführung zum Regenerator der Kabeldämpfung unterworfen sind, ist wegen der benötigten Leistung eine Weiterbildung der Erfindung vorgesehen, bei der die beiden Verbraucherwiderstände durch einen einzigen Verbraucherwiderstand mit vorgeschaltetem Leitungsübertrager ersetzt sind und daß dieser Leitungsübertrager aus zwei gleichlangen Doppelleitungen besteht, daß die erste Doppelleitung auf einen hochpermeablen Kern aufgewickelt ist und die erste Ader der ersten Doppelleitung auf der einen Seite mit dem Ausgangsanschluß für das komplementäre Ausgangssignal und auf der anderen Seite mit Bezugspotential verbunden ist, daß die zweite Ader der ersten Doppelleitung über einen, den ersten Anschluß der ersten Ader benachbarten ersten Anschluß mit Bezugspotential und über einen zweiten Anschluß mit dem gemeinsamen Verbraucherwiderstand sowie mit einem zweiten Anschluß der ersten Ader der zweiten Doppelleitung verbunden ist, daß der erste Anschluß dieser ersten Ader der zweiten Doppelleitung mit dem Ausgangsanschluß für das Ausgangssignal verbunden ist, daß die beiden Anschlüsse der zweiten Ader der zweiten Doppelleitung mit Bezugspotential verbunden sind und daß die Anschlüsse der einzelnen Adern jeweils an den Enden der Doppelleitungen vorgesehen sind.

Zur Verwendung bei niedrigen Frequenzen ist eine Variante der erfindungsgemäßen Anordnung zweckmäßig, bei der das Verzögerungsglied durch eine elektrische Schaltungsanordnung, insbesondere ein getaktetes Schieberegister, realisiert ist.

Die Erfindung soll im folgenden anhand der Zeichnung näher erläutert werden. In der Zeichnung zeigt

Fig. 1 das Schaltbild einer erfindungsgemäßen Anordnung zur Erzeugung von Quasi-Zufallsfolgen im AMI-Code mit einer Modifikation in der Fig. 1a zur Erzeugung von leistungstärkeren Ausgangsimpulsen und

Fig. 2 ein Impulsdiagramm zur Anordnung nach Fig. 1.

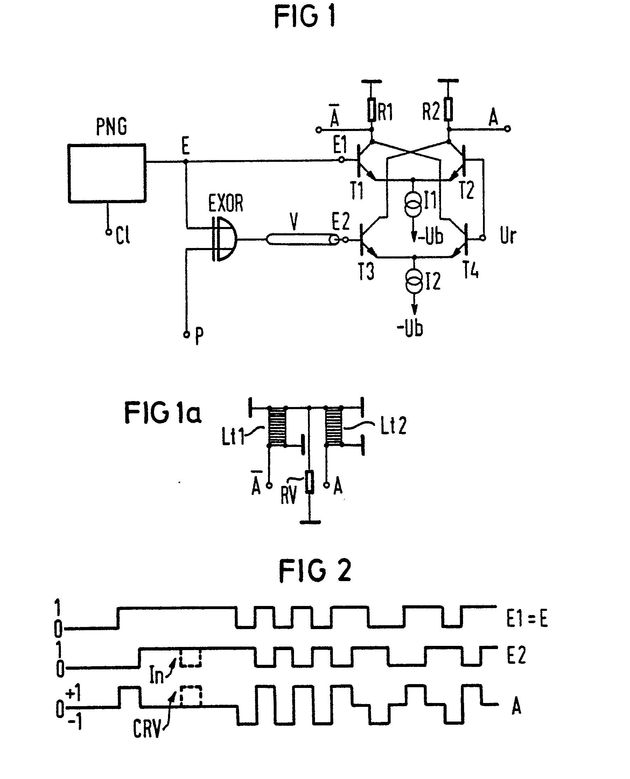

Die Anordnung zur Erzeugung von Quasizufallsfolgen im AMI-Code nach der Fig. 1 enthält einen Generator PNG zur Erzeugung von binären Quasizufallsfolgen, der über einen Anschluß C1 ein Taktsignal erhält. An den Ausgang E des Generators PNG ist der eine Anschluß eines Exclusiv-ODER-Gliedes EXOR sowie der erste Eingang E1 einer Differenzverstärkeranordnung angeschlossen. Die Differenzverstärkeranordnung enthält zwei emittergekoppelte Differenzverstärker, wobei der erste Differenzverstärker einen ersten und einen zweiten npn-Transistor T1, T2 enthält, deren Emitteranschlüsse miteinander und über eine Stromquelle I1 in Form eines Widerstandes mit einem Anschluß für die Betriebsspannung −Ub verbunden ist. Der Kollektoranschluß des ersten Transistors T1 ist mit einem Ausgangsanschluß $\overline{A}$ für das inverse Ausgangssignal sowie über einen ersten Widerstand R1 mit Bezugspotential verbunden. Der Kollektoranschluß des zweiten Transistors T2 ist mit einem Ausgangsanschluß A für das nichtinvertierte Ausgangssignal sowie über einen zweiten Widerstand R2 mit Bezugspotential verbunden. Der zweite Differenzverstärker der Differenzverstärkeranordnung enthält einen dritten und einen vierten npn-Transistor T3, T4, deren Emitteranschlüsse ebenfalls miteinander sowie über eine Stromquelle für den Strom I2 mit einem Anschluß für die Betriebsspannung −Ub verbunden sind. Der Kollektoranschluß des dritten Transistors T3 ist mit dem Kollektoranschluß des zweiten Transistors T2 und der Kollektoranschluß des vierten Transistors T4 ist mit dem Kollektoranschluß des ersten Transistors T1 verbunden. Die Basisanschlüsse des zweiten Transistors T2 und des vierten Transistors T4 sind miteinander sowie mit einer Quelle für eine Referenzspannung Ur verbunden, wobei diese Referenzspannung zwischen den beiden logischen Pegeln des Eingangssignals liegt.

Der andere Anschluß des Exclusiv-ODER-Gliedes EXOR ist mit einem Eingang P verbunden, dem extern Signale zugeführt werden, durch die Coderegelverletzungen in der erzeugten AMI-codierten Quasizufallsfolge ausgelöst werden sollen. Mit dem Ausgangsanschluß des Exclusiv-ODER-Gliedes ist über ein Verzögerungsglied V der zweite Eingang E2 der Differenzverstärkeranordnung verbunden, der dem Basisanschluß des dritten Transistors T3 entspricht. Das Verzögerungsglied V ist bei niedrigen Bitraten durch ein elektronisches Laufzeitglied realisiert, bei hohen Bitraten ist als Verzögerungsglied V eine hinsichtlich ihres Wellenwiderstandes angepaßte Leitung vorgesehen.

Die Funktion der Schaltungsanordnung nach der Fig. 1 besteht allgemein darin, daß durch den Quasizufallsfolgengenerator PNG eine binäre Quasizufallsfolge erzeugt wird, die einmal direkt und einmal durch das Exclusiv-ODER-Glied und das Verzögerungsglied verzögert, der Differenzverstärkeranordnung zugeführt wird. Die Gesamtverzögerung im Exclusiv-ODER-Glied und im Verzögerungsglied entspricht dabei einer Bitdauer der vom Generator PNG erzeugten binären Signale. In der Differenzverstärkeranordnung erfolgt eine Umformung der binären Quasizufallsfolge in eine AMI-codierte Quasizufallsfolge, die direkt am Ausgangsanschluß A oder in inverser Form am Ausgangsanschluß $\overline{A}$ entnommen werden kann.

Da vom Generator PNG binäre Signale erzeugt worden sind, können die Signale an den Eingängen E1 und E2 der Differenzverstärkeranordnung die Logikzustände 0 und 1 annehmen, wobei der Zustand 1 dem höheren Potential zugeordnet ist. Die Signale an den Eingangsanschlüssen E1 und E2 können vier verschiedene Kombinationen bilden, die drei verschiedene Logikzustände am Signalausgang A ergeben. Als erste Kombination der binären Signale kann der Fall auftreten, daß am ersten Eingang E1 der logische Pegel auf dem Wert 1 ist, während am anderen Eingang E2 der Nullpegel ansteht. Dies führt zu einem positiven Einspegel am Ausgangsanschluß A. In einem zweiten Fall kann am zweiten Eingang E2 der logische Einspegel anstehen, während am anderen Eingang E1 der Nullpegel anliegt. In diesem Falle ergibt sich am Signalausgang A der Pegel für −1. Sind die Signale an den beiden Eingängen E1 und E2 jeweils gleich 0 oder gleich 1, dann ergibt sich jeweils der logische Nullpegel am Signalausgang A. In der Schaltung entsprechend Fig. 1 entspricht der negative Einspegel am Signalausgang A dem tiefsten und der positive Einspegel dem höchsten Potential.

Beim ersten vorstehend geschilderten Fall, daß am ersten Eingang E1 der logische Einspegel und am anderen Eingang E2 der logische Nullpegel ansteht, leiten die Transistoren T1 und T4, so daß sowohl der Strom I1 als auch der Strom I2 durch den ersten Widerstand R1 fließen, während der zweite Widerstand R2 annähernd stromlos bleibt und deshalb an ihm das höchste Potential und damit der Zustand +1 auftritt. Liegt am Eingang E1 dass Nullpotential und am Eingang E2 das Einspotential an, dann leiten entsprechend die Transistoren T2 und T3, so daß dann beide Ströme durch den zweiten Widerstand B2 fließen und an ihm und damit am Signalausgang A das teifste Potential entsprechend dem −1-Pegel auftritt. Sind beide Eingangssignale auf dem logischen Nullpegel, dann leiten die Transistoren T2 und T4, so daß durch jeden der beiden Widerstände R1 und R2 ein gleichgroßer Strom fließt und am Signalausgang A das mittlere Potential entsprechend dem Nullpegel auftritt. Dieser Zustand ergibt sich auch, wenn an beiden Eingängen der Einspegel anliegt, da in diesem Falle die Transistoren T1 und T3 leiten und ebenfalls durch jeden der beiden Widerstände R1 und R2 ein annähernd gleichgroßer Strom fließt.

Das Verzögerungsglied V hat eine Verzögerung entsprechend einer Bitdauer der binären Signale. Tritt am Ausgangsanschluß E des Pseudozufallsfolgengenerators PNG ein Signal im Differenzbinärcode auf, dann tritt dieses Signal praktisch gleichzeitig am ersten Eingangs E1 und eine Bitdauer später am zweiten Eingang E2 auf und führt zu entsprechender Umschaltung der Differenzverstärkeranordnung. Ein Potentialwechsel, beispielsweise von 0 auf 1 am Anschluß E, führt damit unmittelbar zu einem positiven Einspegel am Ausganganschluß A und eine Bitdauer später an diesem Anschluß zu einem Signal mit negativem Einspegel. Werden vom Pseudozufallsfolgengenerator PNG binäre Quasizufallsfolgen erzeugt, so führen auch diese zu Quasizufallsfolgen, die am Ausgangsanschluß A im AMI-Code vorliegen. Eine Vertauschung der beiden Eingangsanschlüsse E1 und E2 führt ebenso wie eine Vertauschung der beiden Ausgangsanschlüsse A und Ā zu einem inversen Ausgangssignal.

Durch den Anschluß P können dem Exclusiv-ODER-Glied EXOR einzelne Impulse zugeführt werden, die zu einer Invertierung des am anderen Eingangsanschluß E2 anstehenden logischen Pegels führen. In der Fig. 2 ist der oberen Zeile eine binäre Impulsfolge im NRZ-Format dargestellt, die vom Pseudozufallsfolgengenerator PNG am Anschluß E abgegeben wird. In der mittleren Zeile der Fig. 2 ist das am zweiten Eingang E2 der Differenzverstärkeranordnung anstehende Signal dargestellt. Es zeigt sich, daß dieses Signal dem Ausgangssignal des Pseudozufallsfolgengenerators, allerdings um eine Bitdauer verschoben, entspricht. In der unteren Zeile ist das am Ausgangsanschluß A auftretende pseudoternäre Signal dargestellt. In der mittleren Zeile ist gestrichelt eine Invertierung In dargestellt, die durch einen Eingangsimpuls am Anschluß P in dem am Eingangsanschluß E2 anstehenden Signal erzeugt wurde. Während ohne diese Invertierung an den beiden Eingängen E1 und E2 der Differenzverstärkeranordnung der logische Einspegel anstehen würde und damit am Ausgangsanschluß A der logische Nullpegel erzeugt wurde, wird durch die Invertierung am Eingangsanschluß E2 der logische Nullpegel erzeugt, so daß dadurch am Ausgangsanschluß A der logische Einspegel erzeugt wird, der auf einen logischen Einsimpuls folgt und damit eine Coderegelverletzung CRV darstellt. Es zeigt sich also, daß durch die Invertierung eines einzelnen Bits im Exclusiv-ODER-Glied ausgangsseitig eine Coderegelverletzung auftritt.

Werden mehrere unmittelbar aufeinanderfolgende Bit invertiert, dann kann die Zahl der Coderegelverletzungen geringer als die Zahl der eingeblendeten Invertierungen sein. So treten beispielsweise bei Invertierung von zwei unmittelbar aufeinanderfolgenden Bit im Mittel nur 50% der Fehler im Ausgangssignal als Coderegelverletzungen auf. Die Zahl der Coderegelverletzungen wird geringer, weil durch die Invertierung unter anderem auch zwei aufeinanderfolgende Zustände im AMI-Code, beispielsweise +1/−1 bzw. −1/+1 in den Zustand 0/0 umgewandelt werden. Die in der ausgangsseitig abgegebenen Quasizufallsfolge enthaltenen Fehler wirken in diesem Falle nicht als Coderegelverletzungen. Werden mehr als zwei unmittelbar aufeinanderfolgende Bit invertiert, dann nimmt der relative Anteil, mit dem diese Fehler als Coderegelverletzungen auftreten, weiter ab.

Für die Übertragung der Quasizufallsfolgen im AMI-Code mit eingeblendeten Coderegelverletzungen über eine angeschlossene Leitung wird eine höhere Ausgangsleistung als für den reinen Testbetrieb in einer Zwischenstelle benötigt. Für diesen Fall ist in der Fig. 1a eine Variante des Ausführungsbeispiels dargestellt, die einen Leitungsübertrager enthält. Dieser an sich bekannte Leitungsübertrager ist als symmetrisch-unsymmetrischer 4:1 Leitungsübertrager aufgebaut. Der Leitungsübertrager enthält zwei gleichlange Doppelleitungen Lt1, und Lt2, wobei die erste Doppelleitung Lt1 auf einen hochpermeablen Kern aufgewickelt ist. Die erste Ader der ersten Doppelleitung Lt1 hat an ihrem einen Ende einen ersten Anschluß, der mit dem Anschluß Ā für das inverse Ausgangssignal verbunden ist, während der andere Anschluß der ersten Ader mit Bezugspotential verbunden ist. Der dem ersten Anschluß der ersten Ader benachbarte erste Anschluß der zweiten Ader der ersten Doppelleitung Lt1 ist mit Bezugspotential verbunden, während der zweite Anschluß dieser Ader mit der ersten Ader der zweiten Doppelleitung Lt2 und über einen gemeinsamen Verbraucherwiderstand RV mit Bezugspotential verbunden ist. Der zweite Anschluß der ersten Ader der zweiten Doppelleitung Lt2 ist mit dem Anschluß A für das Ausgangssignal verbunden, während die zweite Ader der zweiten Doppelleitung Lt2 in ihren beiden Endpunkten an Bezugspotential angeschlossen ist. Auf der der Differenzverstärkeranordnung zugewendeten Seite des Leitungsübertragers liegen die Eingänge der Leitungen in Serie, während auf der dem Verbraucherwiderstand zugewandten unsymmetrischen Seite die Ausgänge der Leitungen parallelgeschaltet sind. Eine Erhöhung der Ausgangsleistung ergibt sich dadurch, daß an einem Ausgangsanschluß die Leistungen zur Verfügung stehen, die beim Ausführungsbeispiel nach der Fig. 1 getrennt an den beiden Widerständen R1 und R2 auftreten. Zusätzlich zu dieser Zusammenfassung der Leistungen ergibt sich eine Aufwärtstransformation des unsymmetrischen Verbraucherwiderstandes RV, der beispielsweise ein nachgeschaltetes Koaxialkabel mit einem Wellenwiderstand von 75 Ohm darstellen kann, in die symmetrisch gegen Masse liegenden Lastwiderstände R1 und R2 im Verhältnis von 4:1. Eine weitere Leistungserhöhung durch den Leitungsübertrager ergibt sich dadurch, daß die Kollektorspannung für die angeschlossenen Transistoren ohne wesentlichen Gleichspannungsabfall zugeführt werden kann.

Eine weitere Erhöhung der Ausgangsleistung bei Verbesserung der Flankensteilheit der erzeugten Signale ist dadurch möglich, daß die beiden Differenzverstärker der Differenzverstärkeranordnung unter Wegfall der Referenzspannungsquelle im Gegentakt angesteuert werden. Eine Verbesserung der Flankensteilheit ist weiterhin dadurch möglich, daß die Kollektorkapazität der Transistoren, die im vorliegenden Falle durch die Parallelschaltung zweier Kollektoren erhöht ist, durch eine Serieninduktivität im Kollektorkreis kompensiert wird.

**Patentansprüche**

1. Anordnung zur Erzeugung von Quasizufallsfolgen im AMI-Code mit einem Generator für binäre Quasizufallsfolgen, dadurch gekennzeichnet, daß mit einem Ausgang (E) des getakteten Generators (PNG) für binäre Quasizufallsfolgen der erste Eingang (E1) einer Differenzverstärkeranordnung und der eine Eingang eines Exclusiv-ODER-Gatters (EXOR) verbunden ist, daß der andere Eingang des Exclusiv-ODER-Gatters mit einem Steueranschluß (P) verbunden ist, daß der Ausgang des Exclusiv-ODER-Gatters über ein Verzögerungsglied (V) mit dem zweiten Eingang (E2) der Differenzverstärkeranordnung verbunden ist, daß die Differenzverstärkeranordnung zwei emittergekoppelte Differenzverstärker enthält, daß der erste dieser Differenzverstärker zwei npn-Transistoren (T1, T2) enthält, deren Emitter miteinander und über eine erste Stromquelle (I1) mit einem Anschluß für die negative Betriebsspannung (−Ub) verbunden sind, daß der Basisanschluß des ersten Transistors (T1) mit dem ersten Eingang (E1) der Differenzverstärkeranordnung und der Basisanschluß des zweiten Transistors (T2) mit einer Referenzspannungsquelle (Ur) verbunden ist, daß der Kollektoranschluß des ersten Transistors (T1) mit einem Ausgang ($\overline{A}$) für das inverse Ausgangssignal und über einen ersten Widerstand (R1) mit Bezugspotential verbunden ist, daß der Kollektoranschluß des zweiten Transistors (T2) mit einem Signalausgang (A) und über einen zweiten Widerstand (R2) mit Bezugspotential verbunden ist, daß der zweite Differenzverstärker einen dritten und einen vierten npn-Transistor (T3, T4) enthält, deren Emitteranschlüsse miteinander und über eine zweite Stromquelle (I2) mit der negativen Betriebsspannung (−Ub) verbunden sind, daß der Kollektoranschluß des dritten Transistors (T3) mit dem Kollektoranschluß des zweiten Transistors (T2) und der Kollektoranschluß des vierten Transistors (T4) mit dem Kollektoranschluß des ersten Transistors (T1) verbunden ist, daß der Basisanschluß des vierten Transistors (T4) mit dem Basisanschluß des zweiten Transistors (T2) und der Basisanschluß des dritten Transistors (T3) mit dem zweiten Eingang (E2) der Differenzverstärkeranordnung verbunden ist.

2. Anordnung nach Patentanspruch 1, dadurch gekennzeichnet, daß die beiden Verbraucherwiderstände (R1, R2) durch einen einzigen Verbraucherwiderstand (RV) mit vorgeschaltetem Leitungsübertrager ersetzt sind und daß dieser Leitungsübertrager aus zwei gleichlangen Doppelleitungen (Lt1, Lt2) besteht, daß die erste Doppelleitung (Lt1) auf einen hochpermeablen Kern aufgewickelt ist und die erste Ader der ersten Doppelleitung auf der einen Seite mit dem Ausgangsanschluß ($\overline{A}$) für das komplementäre Ausgangssignal und auf der anderen Seite mit Bezugspotential verbunden ist, daß die zweite Ader der ersten Doppelleitung (Lt1) über einen, den ersten Anschluß der ersten Ader benachbarten ersten Anschluß mit Bezugspotential und über einen zweiten Anschluß mit dem gemeinsamen Verbraucherwiderstand (RV) sowie mit einem zweiten Anschluß der ersten Ader der zweiten Doppelleitung (Lt2) verbunden ist, daß der erste Anschluß dieser ersten Ader der zweiten Doppelleitung mit dem Ausgangsanschluß (A) für das Ausgangssignal verbunden ist, daß die beiden Anschlüsse der zweiten Ader der zweiten Doppelleitung mit Bezugspotential verbunden sind und daß die Anschlüsse der einzelnen Adern jeweils an den Enden der Doppelleitungen (Lt1, Lt2) vorgesehen sind.

3. Anordnung nach Patentanspruch 1, dadurch gekennzeichnet, daß das Verzögerungsglied (V) durch eine elektronische Schaltungsanordnung insbesondere ein getaktetes Schieberegister, realisiert ist.

## Revendications

1. Dispositif pour générer des séquences pseudo-aléatoires en code AMI avec un générateur pour séquences pseudo-aléatoires binaires, caractérisé en ce qu'une sortie (E) du générateur synchronisé (PNG) pour des séquences pseudo-aléatoires binaires est reliée à la première entrée (E1) d'un montage amplificateur différentiel, et à l'une des entrées d'une porte OU-exclusif (EXOR), que l'autre entrée de la porte OU-exclusif est reliée à une borne de commande (P), que la sortie de la porte OU-exclusif (EXOR) est, par l'intermédiaire d'une unité de retard (V), reliée à la seconde entrée (E2) du montage amplificateur différentiel, que le montage amplificateur différentiel comprend deux amplificateurs différentiels à couplage d'émetteur, que le premier de ces amplificateurs différentiels comprend deux transistors NPN (T1, T2), dont les émetteurs sont reliés, entre eux et, par l'intermédiaire d'une première source de courant (I1), à une borne destinée à la tension de service négative (–Ub), que la borne de base du premier transistor (T1) est reliée à la première entrée (E1) du montage amplificateur différentiel et la borne de base du deuxième transistor (T2) est reliée à une source de tension de référence (Ur), que la borne de collecteur du premier transistor (T1) est reliée à une sortie (Ā) destinée au signal de sortie inversé, et est, par l'intermédiaire d'une première résistance (R1), portée à une potentiel de référence, que la borne de collecteur du deuxième transistor (T2) est reliée à une sortie (A) de signaux, et est, par l'intermédiaire d'une seconde résistance (R2), portée au potentiel de référence, que le second amplificateur différentiel comprend un troisième et un quatrième transistor NPN (T3, T4), dont les bornes d'émetteur sont reliées entre elles et, par l'intermédiaire d'une seconde source de courant (I2) portées à une tension de service négative (–Ub), que la borne de collecteur du troisième transistor (T3) est reliée à la borne de collecteur du deuxième transistor (T2) et le borne de collecteur du quatrième transistor (T4) est reliée à la borne de collecteur du premier transistor (T1), et que la borne de base du quatrième transistor (T4) est reliée à la borne de base du deuxième transistor (T2) et la borne de base du troisième transistor (T3) est reliée à la seconde entrée (E2) du montage amplificateur différentiel.

2. Dispositif selon la revendication 1, caractérisé en ce que les deux résistances de charge (R1, R2) sont remplacées par une seule résistance de charge (RV) couplée avec un transformateur de lignes amont, et que ce transformateur de lignes se compose de deux lignes doubles de même longueur (Lt1, Lt2), que la première ligne double (Lt1) est enroulée sur un noyau à haute permitivité et le premier conducteur de la première ligne double est, par l'une de ses extrémités, reliée à la borne de sortie (Ā) destinée au signal de sortie complémentaire et par l'autre extrémité portée au potentiel de référence, que le second conducteur de la première ligne double (Lt1) est, par une première borne, voisine de la première borne du premier conducteur, porté au potentiel de référence et, par une seconde borne, relié à une résistance de charge commune (RV) ainsi qu'à une seconde borne du premier conducteur de la second ligne double (Lt2), que la première borne de ce premier conducteur de la seconde ligne double est reliée à la borne de sortie (A) destinée au signal de sortie, que les deux bornes du second conducteur de la seconde ligne double sont portées au potentiel de référence et que les bornes des conducteurs individuels sont chaque fois prévues aux extrémités des lignes doubles (Lt1, Lt2).

3. Dispositif selon la revendication 1, caractérisé en ce que, l'unité de retard (V) est réalisée au moyen d'un montage électronique, en particulier un registre à décalage synchronisé.

## Claims

1. An arrangement for generating quasi-random sequences in the AMI-code with a generator for binary quasi-random sequences, characterised in that an output (E) of the clock-controlled generator (PNG) for binary quasi-random sequences is connected to the first input (E1) of a differential amplifier arrangement and to the first input of an EXCLUSIVE-OR gate (EXOR), that the other input of the EXCLUSIVE-OR gate is connected to a control terminal (P), that the output of the EXCLUSIVE-OR gate is connected via a delay element (V) to the second input (E2) of the differential amplifier arrangement, that the differential amplifier arrangement includes two emitter-coupled differential amplifiers, that the first of these differential amplifiers comprises two npn-transistors (T1, T2) whose emitters are connected to one another, and to a terminal for the negative operating voltage (–Ub) via a first current source (I1), that the base terminal of the first transistor (T1) is connected to the first input (E1) of the differential amplifier arrangement and the base terminal of the second transistor (T2) is connected to a reference voltage source (Ur), that the collector terminal of the first transistor (T1) is connected to an output (Ā) for the inverse output signal, and to reference potential via a first resistor (R1), that the collector terminal of the second transistor (T2) is connected to a signal output (A), and to reference potential via a second resistor (R2), that the second differential amplifier includes a third and a fourth npn-transistor (T3, T4), whose emitter terminals are connected to one another, and to the negative operating voltage (–Ub) via a second current source (I2), that the collector terminal of the third transistor (T3) is connected to the collector terminal of the second transistor (T2), and the collector terminal of the fourth transistor (T4) is connected to the collector terminal of the first transistor (T1), that the base terminal of the fourth transistor (T4) is connected to the base terminal of the second transistor (T2), and the base terminal of the third transistor (T3) is connected to the second input (E2) of the differential amplifier arrangement.

2. An arrangement as claimed in Claim 1, characterised in that the two load resistors (R1, R2) are replaced by one single load resistor (RV) preceded by a line transformer, and that this line transformer consists of two double lines (Lt1, Lt2) of equal length, that the first double line (Lt1) is wound onto a highly-permeable core and the first wire of the first double line is connected on one side to the output terminal ($\overline{A}$) for the complementary output signal and on the other side to reference potential, that the second wire of the first double line (Lt1) is connected via a first terminal, which is adjacent to the first terminal of the first wire, to reference potential and is connected via a second terminal to the common load resistor (RV) and to a second terminal of the first wire of the second double line (Lt2), that the first terminal of this first wire of the second double line is connected to the output terminal (A) for the output signal, that the two terminals of the second wire of the second double line are connected to reference potential, and that the terminals of the individual wires are each arranged at the ends of the double lines (Lt1, Lt2).

3. An arrangement as claimed in Claim 1, characterised in that the delay element (V) consists of an electronic circuit arrangement, in particular a clock-controlled shift register.

## FIG 1

## FIG 1a

## FIG 2